# EUROPÄISCHE PATENTSCHRIFT

(11) **EP 1 644 707 B1**
(45) Veröffentlichungstag und Bekanntmachung des Hinweises auf die Patenterteilung: **29.12.2010**
(21) Anmeldenummer: 04740681.4
(22) Anmeldetag: 06.07.2004
(51) Int. Cl.: G01F 3/16, F02M 65/00

(54) **VORRICHTUNG ZUR MESSUNG VON ZEITLICH AUFGELÖSTEN VOLUMETRISCHEN DURCHFLUSSVORGÄNGEN**
DEVICE FOR MEASURING TIME-RESOLVED VOLUMETRIC THROUGHFLOW PROCESSES
DISPOSITIF POUR MESURER DES ECOULEMENTS VOLUMETRIQUES A RESOLUTION TEMPORELLE

(30) Priorität: 10.07.2003 DE 10331228
(43) Veröffentlichungstag der Anmeldung: 12.04.2006
(73) Patentinhaber: AVL Pierburg Instruments Flow Technology GmbH, 41460 Neuss (DE)
(72) Erfinder: METZLER, Rainer, 41564 Kaarst (DE); WERNER, Manfred, 40593 Düsseldorf (DE); KAMMERSTETTER, Heribert, A-5411 Oberalm (AT)
(74) Vertreter: Patentanwälte ter Smitten
(86) Internationale Anmeldenummer: PCT/EP2004/007353
(87) Internationale Veröffentlichungsnummer: WO 2005/005935

(56) Entgegenhaltungen:
- US-A- 3 895 529
- US-A- 4 546 648
- DATABASE WPI Section EI, Week 200267 Derwent Publications Ltd., London, GB; Class S02, AN 2002-625638 XP002304665 & NL 10 159 95C C2 (NMI VAN SWINDEN LAB BV) 26. Februar 2002 (2002-02-26)

## Beschreibung

Die Erfindung betrifft eine Vorrichtung zur Messung von zeitlich aufgelösten volumetrischen Durchflußvorgängen insbesondere von Einspritzvorgängen bei Verbrennungskraftmaschinen mit einem translatorischen Volumendifferenzaufnehmer, der im wesentlichen aus einem in einer Meßkammer angeordneten Kolben und einer die Auslenkung des Kolbens aufnehmenden Erfassungseinrichtung besteht, welche mit einer Auswerteeinheit verbunden ist.

Vor allem im Bereich direkteinspritzender Verbrennungskraftmaschinen, die nach dem Diesel- oder dem Ottoverfahren arbeiten, steigen die Anforderungen an die Einspritzsysteme hinsichtlich der zugemessenen Menge, dem Zeitpunkt und dem Verlauf der Einspritzung stetig. So sind Einspritzverläufe in den letzten Jahren dahingehend modifiziert worden, dass entweder die zuzumessende Einspritzmenge für einen Verbrennungszyklus in mehrere kleine Teileinspritzungen aufgetrennt wird oder die Ratenverlaufsformung über die Modulation des Kraftstoffdrucks oder andere ratenmodulierende Maßnahmen kontrolliert wird. Dazu müssen entsprechende Meßvorrichtungen zur Verfügung gestellt werden.

Entsprechend wird in der DE 31 39 831 A1 ein Verfahren beschrieben, bei dem ein Meßkolben durch die in eine Meßkammer eingespritzte Kraftstoffmenge bewegt wird. Aus dem dabei zurückgelegten Weg des Kolbens wird auf die Einspritzmenge geschlossen. Nach einer bestimmten Anzahl von Einzeleinspritzungen erfolgt die Rückführung des Meßkolbens in seine Ausgangsposition. Erfasst werden dabei jeweils die Endstellungen des Meßkolbens. Bei diesem Verfahren treten jedoch aufgrund der Trägheit der Kolbenmasse sowie der auftretenden Reibung für heutige Verhältnisse zu große Meßungenauigkeiten auf.

So wird in der DE 39 16 419 A1 eine elektromagnetisch gesteuerte Meßvorrichtung beschrieben, welche die Vorrichtung gemäß der DE 31 39 831 A1 weiterentwickelt, wobei hier die Meßkammer nach jeder Einspritzung entleert wird. Hierdurch können zwar aufgrund der geringeren zu vermessenden Gesamtvolumina genauere Meßergebnisse erzielt werden, es bleibt jedoch das Problem der relativ großen zu bewegenden Kolbenmasse, wodurch nach wie vor Schwingungen und Verzögerungen im System auftreten. Eine genaue Vermessung beispielsweise einer Nacheinspritzung und deren Verlaufsanalyse ist somit nicht möglich. Des weiteren erfolgt die Entladung des jeweiligen Meßkolbens mit einem Entladeventil, so dass sehr kurz aufeinander folgende Einspritzungen, wie sie im Normalbetrieb eines Verbrennungsmotors üblich sind, nicht aufgelöst werden können.

Eine Weiterentwicklung dieser Vorrichtung zur Verbesserung der Meßgenauigkeit wird in der DE 44 34 597 A1 vorgeschlagen. Dabei wird die Rückstellgeschwindigkeit des Meßkolbens konstant gehalten, so dass die Schaltverzögerung des Magnetventils beim Entleeren mitberücksichtigt werden kann. Trotz dieser verbesserten Reproduzierbarkeit der Kolbenausgangslage verbleibt nachteilhaft die Schwingungsanfälligkeit des Systems nicht zuletzt aufgrund der relativ großen Kolbenmasse. Des weiteren bleibt eine Auflösung zeitnaher Einzeleinspritzungen sowie deren Verläufe aufgrund der Trägheit des Gesamtsystems unmöglich.

In der DE 41 30 394 A1 wird ein Einspritzmengenmeßgerät vorgeschlagen, bei dem die Einspritzung in einen geschlossenen Druckbehälter erfolgt. Nach Messung des jeweils nach Vor- bzw. Haupteinspritzung in diesem Druckbehälter anstehenden Druckes wird erneut ein Ventil geschaltet, so dass die eingespritzte Menge in einen Meßbereich abgelassen wird, in dem sich wiederum ein durch die Flüssigkeit bewegter Kolben befindet, so dass aus der Bewegung des Kolbens auf das eingespritzte Volumen geschlossen werden kann. Durch eine solche Ausführung wird es zwar möglich, die Einspritzvorgänge bezüglich Haupt- bzw. Vor- oder Nacheinspritzung aufzulösen, eine quantitative Aussage bezüglich der Einspritzverläufe während beispielsweise einer Haupteinspritzung bleibt jedoch unmöglich, da keine kontinuierliche Mengenmessung vorliegt. Des weiteren ist ein solcher Aufbau nicht dafür geeignet Messungen am laufenden Motor durchzuführen, da mehrere aufeinander folgende Arbeitszyklen in der dort ablaufenden Geschwindigkeit nicht gemessen werden können.

In der WO 00/79125 wird das Meßprinzip aus der DE 41 30 394 A1 übernommen. Allerdings wird der Druck im Druckbehälter kontinuierlich gemessen, so dass Aussagen über den Verlauf jeder Einzeleinspritzung möglich werden. Der Aufbau ist jedoch sehr komplex, so dass eine Vielzahl von Einflußgrößen die Meßgenauigkeit und die Zuverlässigkeit der Anlage reduzieren. Auch bei einer solchen Vorrichtung ist es nicht möglich, diese am laufendem Motor zu nutzen.

Alternativ hierzu wird in der WO 02/054038 vorgeschlagen, den beweglichen Kolben leichter auszuführen, um ein Nachschwingen möglichst zu vermeiden und einen kapazitiven oder nach dem Wirbelstromprinzip arbeitenden Sensor zur Aufnahme des zu messenden Weges zu verwenden, der berührungslos arbeitet. Durch diese Maßnahmen soll die Messgenauigkeit weiter erhöht werden.

In der DE 1 798 080 wiederum wird ein elektronisch gesteuertes Durchflußmeß- und Dosiergerät beschrieben, welches in einem großen Meßbereich Durchflüsse mit hoher Genauigkeit messen kann. Dieses Meßgerät ist für die Sofortmessung von Durchflüssen aufgrund seiner extrem geringen Trägheit optimal geeignet, jedoch nicht in der Lage zyklussynchrone Durchflußrateninformationen anzuzeigen. Dies bedeutet, dass es nicht möglich ist, zeitgleich zum Arbeitszyklus eines Otto- oder Dieselmotors die genauen Verläufe der zu messenden Einspritzvorgänge sowie deren Periodizität darzustellen.

Mit Ausnahme dieser Vorrichtung ist allen bekannten Vorrichtungen gemeinsam, dass lediglich diskontinuierliche Durchflüsse stromabwärts der Einspritzvorrichtungen meßbar sind. Dies birgt den Nachteil, dass eine Durchflußratenmessung in Kombination mit einer optischen Untersuchung der Strahlausbreitung eines Einspritzstrahles nicht möglich ist. Des weiteren ist die Messgenauigkeit weiterhin eingeschränkt.

Ein kontinuierlich arbeitendes Durchflussmessgerät, welches stromabwärts der Einspritzvorrichtungen angebracht ist, wird auch durch die DE 33 02 059 offenbart. Die Einspritzdüse spritzt dabei in einen Kanal der zu einer Zahnradpumpe führt und zu dem ein zweiter Kanal parallel geschaltet ist, in dem ein Kolben gleitend geführt ist. Diese beiden Kanäle bilden gemeinsam das notwendige Einspritzvolumen, welches durch die Bewegung des Kolbens veränderbar ist. Der Weg des Kolbens wird einerseits gemessen und andererseits über einen elektrischen Regelkreis einem Regelmotor zur Drehzahlregelung der Zahnradpumpe zugeführt. Eine Einspritzmengenmessung mit einer derartigen Vorrichtung liefert aufgrund der Trägheit des Kolbens und der Nichtberücksichtigung der physikalischen Eigenschaften des eingespritzten Fluids nur unzureichend genaue Meßergebnisse.

Eine ähliche Vorrichtung ist aus US-A-4 546 648 bekannt.

Entsprechend ist es Aufgabe der Erfindung, eine Vorrichtung zur Messung von zeitlichen aufgelösten volumetrischen Durchflußvorgängen zu schaffen, die mit einer hohen Meßgenauigkeit quantitativ und qualitativ auswertbare Ergebnisse erzielt, wobei diese Vorrichtung möglichst auch vor einem Einspritzventil positionierbar sein soll sowie in der Lage sein soll an einem laufenden Motor kontinuierlich Einspritzmengen und -verläufe zu messen. Dies ermöglicht die Stabilität der Einspritzungen von Zyklus zu Zyklus und von Einspritzventil zu Einspritzventil quantitativ über statistische Kenngrößen beurteilen zu können. Entsprechend müssen Meßwerte wie die Einspritzrate oder auch die Teilmengen von Mehrfacheinspritzungen, sowie über einen längeren Verlauf die gesamt eingespritzte Menge, sichtbar gemacht werden können.

Diese Aufgabe wird dadurch gelöst, dass in der Meßkammer zusätzlich zu der die Auslenkung des Kolbens aufnehmenden Erfassungseinrichtung ein Drucksensor angeordnet ist, der derart mit der Auswerteeinheit verbunden ist, dass mittels der Messwerte des Drucksensors in der Auswerteeinheit eine Korrektur der aus den Messwerten der Erfassungseinrichtung ermittelten Durchflussmenge stattfindet. Durch den Einsatz des Drucksensors werden Messfehler bei der Berechnung der Einspritzmenge durch die Berücksichtigung der Kompressibilität des Fluids minimiert, so dass die Ergebnisse der Messungen eine deutliche qualitative und quantitative Verbesserung aufweisen.

In einer bevorzugten Ausführungsform ist dem translatorischen Volumendifferenzaufnehmer ein rotatorischer Verdränger zugeordnet, der über einen Motor in Abhängigkeit der anliegenden Volumendifferenz angetrieben ist, wobei die Messkammer in einem Einlasskanal angeordnet ist, der in Strömungsrichtung hinter dem translatorischen Volumendifferenzaufnehmer in einen Auslasskanal mündet und der rotatorische Verdränger in einer Bypassleitung zum translatorischen Volumendifferenzaufnehmer angeordnet ist, wobei die Steuerung des rotatorischen Verdrängers derart erfolgt, dass während eines Arbeitszyklus die Drehzahl des Verdrängers konstant ist und dem mittleren Durchfluß über den gesamten Arbeitszyklus im wesentlichen entspricht. Entsprechend ergibt sich als Kolbenweg ein sägezahnförmiges Signal, da sich die Bewegung des Kolbens aus einer kontinuierlichen Bewegung aufgrund der Drehzahl des rotatorischen Verdrängers sowie einer diskontinuierlichen Bewegung aufgrund der Einzeleinspritzungen zusammensetzt. Ein Arbeitszyklus entspricht dabei beispielsweise einer Vor-, einer Haupt- und einer Nacheinspritzung.

Vorzugsweise besteht die Erfassungseinrichtung aus einem Sensor, dessen erzeugte Spannung ein Maß für die Auslenkung des Kolbens darstellt und der kontinuierlich die Auslenkung des Kolbens in der Meßkammer erfasst. Durchflußänderungen werdensomit über eine entsprechende Spannungsänderung am Sensor erkannt und durch die Übergabe an die Auswerteeinheit können diese Ergebnisse auf einfache Art und Weise in eine Einspritzmenge sowie einen Einspritzverlauf umgerechnet werden. Durch die kontinuierliche Erfassung der Auslenkung kann eine solche Vorrichtung auch an einem laufenden Motor mit vielen aufeinander folgenden Einspritworgängen also Arbeitszyklen verwendet werden, da eine Entleerung der Meßkammern beispielsweise durch Ventile, wie im Stand der Technik, nicht mehr notwendig ist. Des weiteren kann eine solche Vorrichtung sowohl vor als auch hinter einem Kraftstoffeinspritzventil eingebaut werden.

Vorteilhaft ist es, wenn der Kolben das gleiche spezifische Gewicht wie die Meßflüssigkeit aufweist. Dadurch dass das spezifische Gewicht des Kolbens dem der Meßflüssigkeit entspricht und der Kolben frei beweglich angeordnet ist, werden Durchflussänderungen nahezu ohne Zeitverzögerungen durch die korrespondierende Spannungsänderung am Sensor erkannt, wodurch es möglich wird die zeitlichen Verläufe einer einzelnen Einspritzung dazustellen.

Zusätzlich kann in der Meßkammer ein Temperatursensor angeordnet sein, der mit der Auswerteeinheit verbunden ist, so dass auch die Temperatur im Raum in die Berechnung mit einbezogen werden kann, wodurch die Genauigkeit der Messung weiter gesteigert wird, da aufgrund des Druck- und Temperatursignals der Kolbenweg in einen idealen Kolbenweg umgerechnet werden kann, der sich bei isobaren und isothermen Bedingungen während der Messung ergeben würde. Entsprechend wird auch das Kompressibilitätsmodul des Fluids als Funktion von Temperatur und Druck berücksichtigt.

Der Sensor des translatorischen Volumendifferenzaufnehmers kann dabei ein optischer, induktiver oder nach dem Wirbelstromprinzip arbeitender Sensor sein. Diese Sensoren arbeiten nahezu trägheitslos und liefern somit sehr genaue Meßwerte.

Es hat sich als vorteilhaft erwiesen, wenn der rotatorische Verdränger als Zahnradpumpe ausgeführt ist, da diese extrem pulsationsarm fördert.

Zur einfachen Auswertung der gesamten Durchflußmenge hat es sich als vorteilhaft erwiesen, wenn der Motor als Servomotor ausgeführt wird und einen Bewegungssensor aufweist, der mit der Auswerteeinheit und einer Regelelektronik verbunden ist, wobei das Signal des Bewegungssensors ein Maß für die Drehzahl des rotatorischen Verdrängers darstellt. Über die Signale beispielsweise des optischen Sensors und des Bewegungssensors kann der rotatorische Verdränger auf einfache Art und Weise geregelt werden.

Dabei wird vorteilhafterweise der Bewegungssensor als Impulsgeberscheibe ausgeführt, wodurch eine zuverlässige und sehr genaue Ermittlung der Verdrängerdrehzahl ermöglicht wird.

Vorteilhafterweise ist die hydraulische Länge von einem Kraftstoffeinspritzventil zur Eingangsseite des rotatorischen Verdrängers gleich der hydraulischen Länge zur Ausgangsseite des rotatorischen Verdrängers, wodurch es möglich wird, den Verdränger ohne anliegende Druckdifferenz zu betreiben und so exakt zu jedem Zeitpunkt die bis dahin eingespritzte Menge bestimmen zu können.

Bei einer Verwendung zur Messung von Einspritzvorgängen in Verbrennungskraftmaschinen kann es aufgrund der Kompressibilität des Fluids zu einer Fortpflanzung von Druckwellen durch den gesamten Meßaufbau kommen. Zur Entkopplung von unerwünschten Reflexionen dieser Druckwellen ist erfindungsgemäß das Durchflußmeßgerät zwischen mindestens einem Kraftstoffeinspritzventil und einem Laufzeitrohr angeordnet.

Es wird somit eine Vorrichtung geschaffen, die es ermöglicht, kontinuierlich und zeitlich aufgelöst volumetrische Durchflußvorgänge zu messen, wobei der Aufbau sehr einfach ist und dennoch sehr hohe Meßgenauigkeiten erzielbar sind. Hierdurch können qualitativ und quantitativ genaue Aussagen über Einspritzverläufe und Einspritzmengen sowie deren Stabilität getätigt werden. Meßwerte wie die Einspritzrate oder auch die Teilmengen von Mehrfacheinspritzungen sowie die im selben oder einem längeren Zeitraum gesamt eingespritzte Menge können mit dieser Vorrichtung sichtbar gemacht werden.

Des weiteren ist der zur kontinuierlichen Messung verwendete rotatorische Verdränger auf konventionelle Weise kalibrierbar, so dass durch Korrelation der Messwerte damit in vergleichbar einfacher Weise ebenfalls die Einzelschussmessungen kalibrierbar sind.

Eine erfindungsgemäße Vorrichtung ist in den Figuren dargestellt und wird nachfolgend beschrieben.
Figur 1 zeigt schematisch den Aufbau der erfindungsgemäßen Meßvorrichtung hinter einem Einspritzventil.
Figur 2 zeigt beispielhaft typische Kolbenverläufe ohne kontinuierlichen Anteil durch die Zahnradpumpe während eines Arbeitszyklus mit zwei Vor-, einer Haupt- und zwei Nacheinspritzungen sowie den resultierenden Einspritzmengenverlauf.

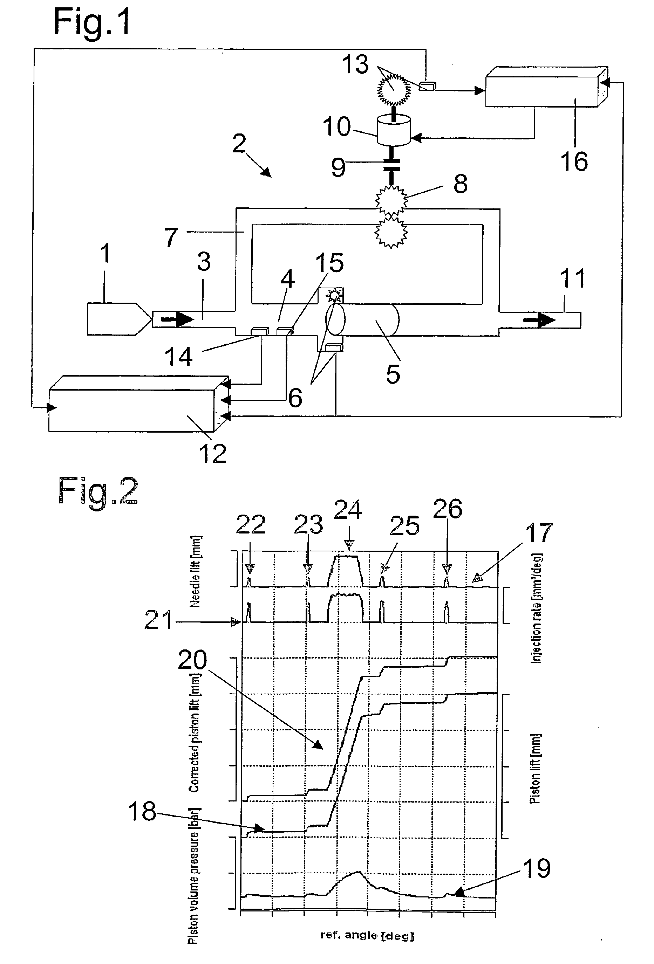

In Figur 1 ist ein Aufbau zur Vermessung von Einspritzvorgängen bei Verbrennungskraftmaschinen mit einer erfindungsgemäßen Vorrichtung zur Messung von zeitlich aufgelösten volumetrischen Durchflußvorgängen dargestellt. Sie besteht aus einer einen Durchfluß erzeugenden nicht dargestellten Einrichtung, in diesem Fall in der Regel einer Hochdruckpumpe und einem Kraftstoffeinspritzventil 1, über welches Kraftstoff in die Meßvorrichtung 2 eingespritzt wird. Die Meßvorrichtung 2 besteht aus einem Einlaßkanal 3, in dem eine Meßkammer 4 angeordnet ist, in der wiederum ein Kolben 5 frei verschiebbar angeordnet ist, wobei der Kolben 5 das gleiche spezifische Gewicht wie die Meßflüssigkeit, also der Kraftstoff aufweist. Dieser Kolben 5 in der Meßkammer 4 dient als translatorischer Volumendifferenzaufnehmer. An der Meßkammer 4 ist ein Sensor 6 angeordnet, der in Wirkverbindung mit dem Kolben 5 steht und in dem durch die Auslenkung des Kolbens 5 eine von der Größe der Auslenkung des Kolbens 5 abhängige Spannung erzeugt wird.

Zusätzlich ist in einer den translatorischen Volumendifferenzaufnehmer umgehenden Bypassleitung 7, welche möglichst kurz hinter dem Einspritzventil 1 abzweigt, ein rotatorischer Verdränger in Form einer Zahnradpumpe 8 angeordnet ist. Die Zahnradpumpe 8 wird über eine Kupplung 9 von einem Servomotor 10 angetrieben. Sowohl die Einlassleitung 3 als auch die Bypassleitung 7 münden in einen Auslaßkanal 11.

Der Sensor 6 ist mit einer Auswerteeinheit 12 verbunden, welche die Werte dieses Sensors 6 sowie die Umdrehungszahl des Motors 10, der mit einem Bewegungssensor in Form eines Impulsgebers 13 verbunden ist, aufnimmt und weiterverarbeitet. Der Sensor 6 ist hier als optischer Sensor ausgeführt. In der Meßkammer 4 zwischen dem Kolben 5 und der Einspritzvorrichtung 1 ist ein Drucksensor 14 sowie ein Temperatursensor 15 angeordnet, die kontinuierlich die in diesem Bereich auftretenden Drücke und Temperaturen messen und wiederum der Auswerteeinheit 12 zuführen. Zur Verhinderung von Reflexionen entstehender Druckwellen wird hinter dem Auslaßkanal 11 der Meßvorrichtung 2 ein nicht dargestelltes Laufzeitrohr angeordnet, wodurch die Druckwellen vom Meßvorgang zeitlich entkoppelt werden.

Der Ablauf der Messungen wird im folgenden beschrieben. Wird Kraftstoff vom Kraftstoffeinspritzventil 1 in die Meßvorrichtung 2 beziehungsweise den Einlaßkanal 3 eingespritzt, reagiert der Kolben 5 ohne Verzögerung, also trägheitsfrei, da er das gleiche spezifische Gewicht wie der Kraftstoff aufweist sofort identisch der zugeführten Kraftstoffsäule, so dass seine Auslenkung ein Maß für das Volumen der eingespritzten Kraftstoffmenge darstellt. In der Messkammer 4, dem Einlasskanal 3, über den Kolben sowie über die Zahnradpumpe 8 entsteht dabei keine Druckdifferenz, da die hydraulischen Längen vom Einspritzventil 1 zur Eingangs- und zur Ausgangsseite der Zahnradpumpe 8 gleich gehalten werden. Die im Bypasskanal 7 angeordnete Zahnradpumpe 8 wird gleichzeitig mit einer Drehzahl angetrieben, die abhängig ist von der Auslenkung des Kolbens 5 und somit von der eingespritzten Kraftstoffmenge. Die Regelung erfolgt allerdings derart, dass über einen Arbeitszyklus also beispielsweise Voreinspritzung, Haupteinspritzung, Nacheinspritzung die Drehzahl der Zahnradpumpe 8 konstant gehalten wird und lediglich bei auftretenden Abweichungen, das heißt einer Stellung des Kolbens 5 am Ende eines Zyklus, der nicht der Ausgangsstellung vor dem Arbeitszyklus entspricht, nachgeregelt wird. Dazu werden in einer Regelelektronik 16 die Werte des Sensors 6 zu Beginn und am Ende eines Arbeitszyklus unter zu Hilfenahme der Werte der Impulsgeberscheibe 13 miteinander verglichen und ein entsprechendes Signal zur Ansteuerung des Motors 10 erzeugt.

Die Auslenkung des Kolbens 5 entsteht somit durch Überlagerung eines Anteils mit konstanter Geschwindigkeit in entgegengesetzter Richtung zur Auslenkungsrichtung bei einer Einspritzung sowie eines diskontinuierlichen Anteils während eines Einspritzvorgangs. Somit ergibt sich für die Bewegung des Kolbens 5 in graphischer Darstellung im wesentlichen ein Sägezahnprofil, wobei der kontinuierliche Anteil der Kolbenbewegung durch die Drehung der Zahnradpumpe 8 durch lineare Regression vorausberechnet wird. Die gesamte Meßvorrichtung 2 ist möglichst nah am Einspritzventil 1 anzuordnen, um Einflüsse durch die Kompressibilität des Fluids möglichst gering zu halten. Mit Hilfe des in der Meßkammer 4 angeordneten Drucksensors 14 und des Temperatursensors 15 wird in der Auswerteeinheit 12 das Signal des Sensors 6, also das durch die Bewegung des Kolbens 5 entstehende Signal, in eine Kraftstoffeinspritzmenge über die Zeit umgerechnet. Dazu wird automatisch der kontinuierliche Anteil der durch die Zahnradpumpe 8 entstehenden Bewegung von dem tatsächlich zurückgelegten Weg also den Werten des Sensors 6 subtrahiert. Entsprechend erhält die Auswerteeinheit 12 vom Impulsgeber 13 am Servomotor 10 die entsprechenden Signale zur Bestimmung des Durchflusses durch die Zahnradpumpe 8. Die Umrechnung in der elektronischen Auswerteeinheit 12 erfolgt über eine physikalisch basierte Modellrechnung, bei der der tatsächlich gemessene Kolbenweg mit Hilfe des Druck- und Temperatursignals in einen idealen Kolbenweg umgerechnet wird, der sich bei isobaren und isothermen Bedingungen während der Messung einstellen würde. Entsprechend wird in dieser Rechnung auch das Kompressibilitätsmodul des Fluids als Funktion von Temperatur und Druck berücksichtigt. Selbstverständlich vereinfacht sich diese Rechnung sehr deutlich durch die gleichbleibende Drehgeschwindigkeit der Zahnradpumpe 8 und somit den kontinuierlichen Bewegungsanteil des Kolbens 5.

In Figur 2 ist der über eine induktive Abtastung gemessene Nadelhub 17 des Kraftstoffeinspritzventils 1, der vom Sensor 6 gemessene Kolbenweg 18, wobei der kontinuierliche Anteil durch die Zahnradpumpe 8 bereits herausgerechnet wurde, der vom Drucksensor 14 gemessene Druckverlauf 19, der mit Hilfe des Druckverlaufs 19 korrigierte Kolbenweg 20 sowie der aus diesen Daten berechnete resultierende Einspritzmengenverlauf 21 des Kraftstoffeinspritzventils 1 über die Zeit dargestellt. Es wird deutlich, dass durch die erste Voreinspritzung 22 der Kolben 5 in der Meßkammer 4 ausgelenkt wird und der Druck in der Messkammer 4 ansteigt. Durch die Auslenkung des Kolbens 5 fällt der Druck in der Meßkammer 4 danach wieder ab. Die konstante Bewegung der Zahnradpumpe 8 führt dazu, dass der tatsächlich gemessene Weg, aus dem der Kolbenweg 18 abgeleitet wird, einen stetigen Abfall aufweist. Der tatsächlich gemessene Weg ist nicht dargestellt. Entsprechend ergeben sich die Druck- und Kolbenwegverläufe 18-21 bei der folgenden zweiten Voreinspritzung 23 sowie der Haupt- 24 und den zwei Nacheinspritzungen 25,26. Die Zahnradpumpe 8 ist so geregelt, dass der Druck und somit die tatsächliche Stellung des Kolbens 5 bei Abschluß des Arbeitszyklus wieder der Ausgangslage entsprechen.

Durch die unmittelbare Bewegung des Kolbens 5 aufgrund seiner nahezu nicht vorhandenen Trägheit sind hier während des Arbeitszyklus auch Änderungen im Mikrosekundenbereich meß- und verwertbar, so dass diese Meßvorrichtung 2 in der Lage ist, Vergleiche zwischen verschiedenen Einspritzventilen 1 bezüglich ihrer Einspritzmengen und insbesondere auch der zeitlichen Verläufe der Einspritzvorgänge zu machen. Der Gesamtdurchfluß über ein gewisses Zeitintervall ergibt sich aus der Ausgabe des Impulsgebers 13 der Zahnradpumpe 8. Das Zeitintervall wird mit den Einspritzungen synchronisiert.

Alternativ kann die oben beschriebene Meßvorrichtung 2 auch vor dem Kraftstoffeinspritzventil 1 angeordnet sein, wobei dann auch das Laufzeitrohr vor der Durchflußmessung angeordnet wird, so dass die gesamte Meßvorrichtung 2 zwischen der Hochdruckpumpe und dem Kraftstoffeinspritzventil 1 angeordnet ist. Zusätzlich ist es denkbar, entsprechende Sicherheitsfunktionen bei Übersteuerung im Volllastbereich vorzusehen, indem beispielsweise ein Bypaßkanal zur Meßkammerauslaßseite derart gelegt wird, dass bei einer zu großen Auslenkung des Kolbens 5 hier Flüssigkeit überströmen kann.

Ferner wird deutlich, dass eine solche Vorrichtung auch zur Messung von anderen Durchflußvorgängen geeignet ist.

Diese erfindungsgemäße Vorrichtung ermöglicht eine Messung von Durchflußvorgängen am laufenden Motor vor oder hinter dem Einspritzventil mit einer beliebigen Anzahl aufeinander folgender Kraftstoffeinspritzimpulse. So wird es möglich, quantitativ und qualitativ hochwertige Aussagen zu Einspritzmengen, Einspritzverläufen zu machen und unterschiedliche Einspritzventile zu beurteilen.

Es sollte deutlich sein, dass neben den induktiven oder optischen Sensoren auch andere Sensoren, wie Geschwindigkeitssensoren oder Beschleunigungssensoren zur Messung der Auslenkung des Kolbens benutzt werden können, ohne den Schutzbereich des Hauptanspruchs zu verlassen. Die von diesen Sensoren erzeugte Spannung ist weiterhin ein Maß für die Auslenkung des Kolbens, wobei die Geschwindigkeit bzw. die Beschleunigung des Kolbens über in der Auswerteeinheit durchgeführte einfache bzw. zweifache Integration wieder in den Weg umgerechnet werden.

## Patentansprüche

1. Vorrichtung zur Messung von zeitlich aufgelösten volumetrischen Durchflußvorgängen insbesondere von Einspritzvorgängen bei Verbrennungskraftmaschinen mit einem translatorischen Volumendifferenzaufnehmer, der im wesentlichen aus einem in einer Meßkammer angeordneten Kolben und einer die Auslenkung des Kolbens aufnehmenden Erfassungseinrichtung besteht, welche mit einer Auswerteeinheit verbunden ist, **dadurch gekennzeichnet, dass** in der Meßkammer (4) zusätzlich zu der die Auslenkung des Kolbens aufnehmenden Erfassungseinrichtung (6) ein Drucksensor (14) angeordnet ist, der derart mit der Auswerteeinheit (12) verbunden ist, dass mittels der Messwerte des Drucksensors (14) in der Auswerteeinheit (12) eine Korrektur der aus den Messwerten der Erfassungseinrichtung (6) ermittelten Durchflussmenge stattfindet.

2. Vorrichtung zur Messung von zeitlich aufgelösten volumetrischen Durchflußvorgängen insbesondere von Einspritzvorgängen bei Verbrennungskraftmaschinen, nach Anspruch 1, **dadurch gekennzeichnet, dass** dem translatorischen Volumendifferenzaufnehmer (4, 5, 6) ein rotatorischer Verdränger (8) zugeordnet ist, der über einen Motor (10) in Abhängigkeit der anliegenden Volumendifferenz angetrieben ist, wobei die Messkammer (4) in einem Einlasskanal (3) angeordnet ist, der in Strömungsrichtung hinter dem translatorischen Volumendifferenzaufnehmer (4, 5, 6) in einen Auslasskanal (11) mündet und der rotatorische Verdränger (8) in einer Bypassleitung (7) zum translatorischen Volumendifferenzaufnehmer (4, 5, 6) angeordnet ist, wobei die Steuerung des rotatorischen Verdrängers (8) derart erfolgt, dass während eines Arbeitszyklus die Drehzahl des Verdrängers (8) konstant ist und dem mittleren Durchfluß über den gesamten Arbeitszyklus im wesentlichen entspricht.

3. Vorrichtung zur Messung von zeitlich aufgelösten volumetrischen Durchflußvorgängen insbesondere von Einspritzvorgängen bei Verbrennungskraftmaschinen, nach einem der Ansprüche 1 oder 2, **dadurch gekennzeichnet, dass** die Erfassungseinrichtung (6) aus einem Sensor besteht, dessen erzeugte Spannung ein Maß für die Auslenkung des Kolbens (5) darstellt und der kontinuierlich die Auslenkung des Kolbens (5) in der Meßkammer (4) erfasst.

4. Vorrichtung zur Messung von zeitlich aufgelösten volumetrischen Durchflußvorgängen insbesondere von Einspritzvorgängen bei Verbrennungskraftmaschinen, nach einem der vorhergehenden Ansprüche, **dadurch gekennzeichnet, dass** der Kolben (5) das gleiche spezifische Gewicht wie die Meßflüssigkeit aufweist.

5. Vorrichtung zur Messung von zeitlich aufgelösten volumetrischen Durchflußvorgängen insbesondere von Einspritzvorgängen bei Verbrennungskraftmaschinen nach einem der vorhergehenden Ansprüche, **dadurch gekennzeichnet, dass** in der Meßkammer (4) ein Temperatursensor (15) angeordnet ist, der mit derAuswerteeinheit (12) verbunden ist.

6. Vorrichtung zur Messung von zeitlich aufgelösten volumetrischen Durchflußvorgängen insbesondere von Einspritzvorgängen bei Verbrennungskraftmaschinen nach einem der vorhergehenden Ansprüche, **dadurch gekennzeichnet, dass** der Sensor (6) ein optischer, induktiver oder nach dem Wirbelstromprinzip arbeitender Sensor ist.

7. Vorrichtung zur Messung von zeitlich aufgelösten volumetrischen Durchflußvorgängen insbesondere von Einspritzvorgängen bei Verbrennungskraftmaschinen nach einem der vorhergehenden Ansprüche, **dadurch gekennzeichnet, dass** der rotatorische Verdränger (8) als Zahnradpumpe ausgeführt ist.

8. Vorrichtung zur Messung von zeitlich aufgelösten volumetrischen Durchflußvorgängen insbesondere von Einspritzvorgängen bei Verbrennungskraftmaschinen nach einem der vorhergehenden Ansprüche, **dadurch gekennzeichnet, dass** der Motor als Servomotor (10) ausgeführt ist und einen Bewegungssensor (13) aufweist, der mit der Auswerteeinheit (12) und einer Regelelektronik (16) verbunden ist, wobei das Signal des Bewegungssensors (13) ein Maß für die Drehzahl des rotatorischen Verdrängers (8) darstellt.

9. Vorrichtung zur Messung von zeitlich aufgelösten volumetrischen Durchflußvorgängen insbesondere von Einspritzvorgängen bei Verbrennungskraftmaschinen nach Anspruch 8, **dadurch gekennzeichnet, dass** der Bewegungssensor (13) als Impulsgeberscheibe ausgeführt ist.

10. Vorrichtung zur Messung von zeitlich aufgelösten volumetrischen Durchflußvorgängen insbesondere von Einspritzvorgängen bei Verbrennungskraftmaschinen nach einem der vorhergehenden Ansprüche, **dadurch gekennzeichnet, dass** die hydraulische Länge von einem Kraftstoffeinspritzventil (1) zur Eingangseite des rotatorischen Verdrängers (8) gleich der hydraulischen Länge zur Ausgangsseite des rotatorischen Verdrängers (8) ist.

11. Vorrichtung zur Messung von zeitlich aufgelösten Einspritzvorgängen bei Verbrennungskraftmaschinen nach einem der vorhergehenden Ansprüche, **dadurch gekennzeichnet, dass** die Meßvorrichtung (2) zwischen mindestens einem Kraftstoffeinspritzventil (1) und einem Laufzeitrohr angeordnet ist.

## Claims

1. A device for measuring time-resolved volumetric throughflow processes, especially injection processes in internal combustion engines, comprising a translatory volume difference sensor which substantially consists of a piston disposed in a measuring compartment and a detection device detecting the excursion of the piston, said detection device being connected to an evaluating unit, **characterized in that** a pressure sensor (14) is arranged in the measuring compartment (4) in addition to the detection device (6) detecting the excursion of the piston, said pressure sensor being connected to the evaluating unit (12) such that by means of the measured values of the pressure sensor (14) a correction of a flow amount ascertained from the measured values of the detection device (6) takes place in the evaluating unit (12).

2. A device for measuring time-resolved volumetric throughflow processes, especially injection processes in internal combustion engines, as of claim 1, **characterized in that** a rotary displacer (8) is assigned to the translatory volume difference sensor (4, 5, 6), which displacer is driven via a motor (10) depending on the existing volume difference, wherein the measuring compartment (4) is arranged in an intake duct (3) that opens into an outlet duct (11) downstream, seen in the flow direction, of the translatory volume difference sensor (4, 5, 6), and the rotary displacer (8) is arranged in a bypass line (7) to the translatory volume difference sensor (4, 5, 6), said rotary displacer (8) being controlled such that, during one work cycle, the speed of the displacer (8) is constant and substantially corresponds to the average flow over the entire work cycle.

3. A device for measuring time-resolved volumetric throughflow processes, especially injection processes in internal combustion engines, as of one of claims 1 or 2, **characterized in that** the detection device (6) is formed by a sensor whose voltage produced is a measurement for the excursion of the piston (5) and which continuously detects the excursion of the piston (5) in the measuring compartment (4).

4. A device for measuring time-resolved volumetric throughflow processes, especially injection processes in internal combustion engines, as of one of the preceding claims, **characterized in that** the piston (5) has the same specific weight as the liquid to be measured.

5. A device for measuring time-resolved volumetric throughflow processes, especially injection processes in internal combustion engines, as of one of the preceding claims, **characterized in that** a temperature sensor (15) is arranged in the measuring compartment (4), which is connected to the evaluating unit (12).

6. A device for measuring time-resolved volumetric throughflow processes, especially injection processes in internal combustion engines, as of one of the preceding claims, **characterized in that** the sensor (6) is an optical or inductive sensor or a sensor operating according to the eddy current principle.

7. A device for measuring time-resolved volumetric throughflow processes, especially injection processes in internal combustion engines, as of one of the preceding claims, **characterized in that** the rotary displacer (8) is a gear pump.

8. A device for measuring time-resolved volumetric throughflow processes, especially injection processes in internal combustion engines, as of one of the preceding claims, **characterized in that** the motor is configured as a servo motor (10) and comprises a movement sensor (13) connected to the evaluating unit (12) and regulating electronics (16), the signal of the movement sensor (13) being a measurement of the speed of the rotary displacer (8).

9. A device for measuring time-resolved volumetric throughflow processes, especially injection processes in internal combustion engines, as of claim 8, **characterized in that** the movement sensor (13) is configured as a pulse generator disc.

10. A device for measuring time-resolved volumetric throughflow processes, especially injection processes in internal combustion engines, as of one of the preceding claims, **characterized in that** the hydraulic length from one fuel injection valve (1) to the inlet side of the rotary displacer (8) is equal to the hydraulic length to the outlet side of the rotary displacer (8).

11. A device for measuring time-resolved volumetric throughflow processes, especially injection processes in internal combustion engines, as of one of the preceding claims, **characterized in that** the measuring device (2) is arranged between at least one fuel injection valve (1) and a transit time tube.

## Revendications

1. Dispositif pour mesurer des écoulements volumétriques à résolution temporelle, notamment des processus d'injection dans des moteurs à combustion interne, comprenant un détecteur de différence volumétrique translatoire sensiblement formé par un piston disposé dans une chambre de mesurage et un dispositif de détection détectant la course dudit piston, ledit dispositif de détection étant connecté à une unité d'évaluation, **caractérisé en ce qu'**en plus du dispositif de détection (6) détectant le déplacement du piston, un capteur de pression (14) est disposé dans la chambre de mesurage (4), ledit capteur étant connecté à ladite unité d'évaluation (12) de sorte qu'une correction de la quantité de débit déterminée à partir des valeurs mesurées dudit dispositif de détection (6) est faite dans ladite unité d'évaluation (12) par utilisation des valeurs du capteur de pression (14).

2. Dispositif pour mesurer des écoulements volumétriques à résolution temporelle, notamment des processus d'injection dans des moteurs à combustion interne, selon la revendication 1, **caractérisé en ce qu'**un déplaceur rotatif (8) est assigné au détecteur de différence volumétrique translatoire (4, 5, 6), ledit déplaceur étant entrainé par un moteur (10) en fonction de la différence volumétrique présente, ladite chambre de mesurage (4) étant disposée dans un canal d'admission (3) s'ouvrant dans un canal de sortie (11) en aval du détecteur de différence volumétrique translatoire (4, 5, 6), vu dans la direction d'écoulement, et ledit déplaceur rotatif (8) étant disposé dans une ligne de dérivation (7) menant au détecteur de différence volumétrique translatoire (4, 5, 6), le déplaceur rotatif (8) étant commandé de sorte que, pendant un cycle de marche, la vitesse du déplaceur (8) est constante et sensiblement correspond au débit moyen du cycle de marche entier.

3. Dispositif pour mesurer des écoulements volumétriques à résolution temporelle, notamment des processus d'injection dans des moteurs à combustion interne, selon les revendications 1 ou 2, **caractérisé en ce que** ledit dispositif de détection (6) est formé par un capteur dont la tension générée représente une mesure de la course du piston (5), et qui détecte continument la course du piston (5) dans la chambre de mesurage (4).

4. Dispositif pour mesurer des écoulements volumétriques à résolution temporelle, notamment des processus d'injection dans des moteurs à combustion interne, selon l'une quelconque des revendications précédentes, **caractérisé en ce que** ledit piston (5) a le même poids spécifique que le liquide à mesurer.

5. Dispositif pour mesurer des écoulements volumétriques à résolution temporelle, notamment des processus d'injection dans des moteurs à combustion interne, selon l'une quelconque des revendications précédentes, **caractérisé en ce qu'**un capteur de température (15) est disposé dans la chambre de mesurage (4), ledit capteur étant connecté à ladite unité d'évaluation (12).

6. Dispositif pour mesurer des écoulements volumétriques à résolution temporelle, notamment des processus d'injection dans des moteurs à combustion interne, selon l'une quelconque des revendications précédentes, **caractérisé en ce que** ledit détecteur (6) est un détecteur optique, inductif ou fonctionnant selon le principe du courant tourbillonnaire.

7. Dispositif pour mesurer des écoulements volumétriques à résolution temporelle, notamment des processus d'injection dans des moteurs à combustion interne, selon l'une quelconque des revendications précédentes, **caractérisé en ce que** le déplaceur rotatif (8) est réalisé comme pompe à engrenages.

8. Dispositif pour mesurer des écoulements volumétriques à résolution temporelle, notamment des processus d'injection dans des moteurs à combustion interne, selon l'une quelconque des revendications précédentes, **caractérisé en ce que** le moteur est un servomoteur (10) et comprend un capteur de mouvement (13) connecté à ladite unité d'évaluation (12) et à un dispositif électronique de réglage (16), le signal du capteur de mouvement (13) étant une mesure de la vitesse dudit déplaceur rotatif (8).

9. Dispositif pour mesurer des écoulements volumétriques à résolution temporelle, notamment des processus d'injection dans des moteurs à combustion interne, selon la revendication 8, **caractérisé en ce que** ledit capteur de mouvement (13) est un disque impulseur.

10. Dispositif pour mesurer des écoulements volumétriques à résolution temporelle, notamment des processus d'injection dans des moteurs à combustion interne, selon l'une quelconque des revendications précédentes, **caractérisé en ce que** la longueur hydraulique à partir d'une soupape d'injection de carburant (1) jusqu'au côté d'admission dudit déplaceur rotatif (8) est égale à la longueur hydraulique jusqu'au côté de sortie duit déplaceur rotatif (8).

11. Dispositif pour mesurer des écoulements volumétriques à résolution temporelle, notamment des processus d'injection dans des moteurs à combustion interne, selon l'une quelconque des revendications précédentes, **caractérisé en ce que** les dispositif de mesurage (2) est disposé entre au moins d'une soupape d'injection de carburant (1) et une tube à transite de temps.
